# EUROPEAN PATENT APPLICATION

(11) **EP 4 506 056 A1**
(43) Date of publication of application: **12.02.2025**
(21) Application number: 23860613.1
(22) Date of filing: 13.06.2023
(51) Int. Cl.: B01D 61/48, B01D 61/52, B01D 61/54, B01D 61/58, C02F 1/469, C02F 1/00, B01D 61/42

(54) **WATER PURIFIER AND METHOD FOR CONTROLLING SAME**

(30) Priority: 01.09.2022 KR 20220111041; 15.02.2023 KR 20230020351
(71) Applicant: Samsung Electronics Co., Ltd., Suwon-si, Gyeonggi-do 16677 (KR)
(72) Inventor: PARK, Jungha, Suwon-si Gyeonggi-do 16677 (KR); GWAK, Gimun, Suwon-si Gyeonggi-do 16677 (KR); KIM, Sungjin, Suwon-si Gyeonggi-do 16677 (KR); LEE, Junggeun, Suwon-si Gyeonggi-do 16677 (KR); LEE, Jongho, Suwon-si Gyeonggi-do 16677 (KR)
(74) Representative: Walaski, Jan Filip
(86) International application number: PCT/KR2023/008096
(87) International publication number: WO 2024/048927

(57) **Abstract**

Disclosed is a water purifier includes a deionization device for purifying water with electric power, and a controller electrically connected to the deionization. The deionization device includes a housing and a plurality of electric filters arranged in a plurality of isolation rooms formed in the housing. The controller operates the plurality of electric filters by dividing the plurality of electric filters into a plurality of electric adsorption filters which adsorb ionic materials and at least one electric resting filter which remains in a standby state during a water purification operation, and restart the water purification operation or perform a recycling operation to recycle the plurality of electric filters, depending on whether a restart command for the water purification operation is input within a preset waiting time from a point in time when the water purification operation is stopped.

## Description

### [Technical Field]

The disclosure relates to a home water purifier and method for controlling the same.

### [Background Art]

Water purifiers are a device for providing drinking water for the user by filtering raw water supplied from outside. For this, the water purifier includes components such as at least one filter for filtering the raw water, multiple pipes in which water flows, and valves for controlling water flows. The water purifier may include various deionization filters that purify water. For example, the water purifier may include a capacitive deionization (CDI) filter, an electro deionization (EDI) filter or a continuous electro deionization (CEDI) filter. The deionization filter may purify water by adsorbing ionic materials contained in the water. The deionization filter has a restriction on adsorption ability due to the capacitance, and thus needs to be periodically recycled. In a case of the traditional water purifier including the deionization filter, it is difficult to continuously output the purified water and the user may not use the water purifier while the deionization filter is being recycled.

There is also a water purifier that recycles a deionization filter while another deionization filter is purifying water. In this water purifier, however, as only one of the two deionization filters performs water purification, there is performance loss resulting from using only half of the whole purification performance.

### [Disclosure]

### [Technical Solution]

The disclosure provides a water purifier and method for controlling the same, capable of minimizing performance loss of a deionization device by using a plurality of electric filters arranged in parallel, and providing purified water anytime.

The disclosure also provides a water purifier and method for controlling the same, capable of making a filter assembly smaller by arranging a plurality of electric filters to be isolated from each other in a housing.

According to an embodiment, a water purifier includes a deionization device configured to purify water with electric power and a controller electrically connected to the deionization device. The deionization device may include a housing, a plurality of partition walls defining a plurality of isolation rooms in the housing, and a plurality of electric filters received in the plurality of isolation rooms, respectively. The controller may operate the plurality of electric filters by dividing the plurality of electric filters into a plurality of electric adsorption filters which adsorb ionic materials and at least one electric resting filter which remains in a standby state during a water purification operation. The controller may restart the water purification operation or perform a recycling operation to recycle the plurality of electric filters depending on whether a restart command for the water purification operation is input within a preset waiting time from a point in time when the water purification operation is stopped. The controller may maintain a first number of the plurality of electric adsorption filters to be larger than a second number of the at least one electric resting filter during the water purification operation.

According to an embodiment, a method for controlling a water purifier includes operating, by a controller, a plurality of electric filters arranged in a plurality of isolation rooms formed in a housing, respectively, by dividing the plurality of electric filters into a plurality of electric adsorption filters which adsorb ionic materials and at least one electric resting filter which remains in a standby state during a water purification operation of the water purifier; restarting the water purification operation or performing recycling operation to recycle the plurality of electric filters, by the controller, depending on whether a restart command for the water purification operation is input within a preset waiting time from a point in time when the water purification operation is stopped; and maintaining, by the controller, a first number of the plurality of electric adsorption filters to be larger than a second number of the at least one electric resting filter.

The water purifier and method for controlling the same as disclosed herein may minimize performance loss of a deionization device by using a plurality of electric filters arranged in parallel, and providing purified water anytime. Accordingly, convenience of use of the water purifier may be improved.

Furthermore, the water purifier and method for controlling the same as disclosed herein may make a filter assembly smaller by having a plurality of electric filters separately arranged in one housing. Accordingly, the total size of the water purifier may be reduced.

### [Description of Drawings]

FIG. 1 illustrates a control block diagram of a water purifier, according to an embodiment of this disclosure;
FIG. 2 illustrates a configuration of a filter assembly, according to an embodiment of this disclosure;
FIG. 3 illustrates a housing of a deionization filter, according to an embodiment of this disclosure;
FIG. 4 illustrates partition walls in a housing of a deionization filter, according to an embodiment of this disclosure;
FIG. 5 illustrates a cross-sectional view of a deionization filter, according to an embodiment of this disclosure;
FIG. 6 illustrates a principle of water purification by a deionization filter, according to an embodiment of this disclosure;
FIG. 7 illustrates a principle of recycling of a deionization filter, according to an embodiment of this disclosure;
FIG. 8 illustrates an example of circular operation of some of a plurality of electric filters during a water purification operation, according to an embodiment. of this disclosure;
FIG. 9 illustrates an example of sequentially recycling a plurality of electric filters during a water purification operation, according to an embodiment. of this disclosure;
FIG. 10 illustrates a method of controlling a water purifier, according to an embodiment of this disclosure;

### [Modes of the Invention]

Embodiments and features as described and illustrated in the disclosure are merely examples, and there may be various modifications replacing the embodiments and drawings at the time of filing this application.

Throughout the drawings, like reference numerals refer to like parts or components. It will be further understood that the term "connect" or its derivatives refer both to direct and indirect connection, and the indirect connection includes a connection over a wireless communication network.

The terminology used herein is for the purpose of describing particular embodiments only and is not intended to limit the disclosure. It is to be understood that the singular forms "a," "'an," and "the" include plural references unless the context clearly dictates otherwise. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof.

The terms including ordinal numbers like "first" and "second" may be used to explain various components, but the components are not limited by the terms. The terms are only for the purpose of distinguishing a component from another. Thus, a first element, component, region, layer or room discussed below could be termed a second element, component, region, layer or section without departing from the teachings of the disclosure. Descriptions shall be understood as to include any and all combinations of one or more of the associated listed items when the items are described by using the conjunctive term "~ and/or ~," or the like.

Furthermore, the terms, such as "~ part", "~ block", "~ member", "~ module", etc., may refer to a unit of handling at least one function or operation. For example, the terms may refer to at least one process handled by hardware such as field-programmable gate array (FPGA)/application specific I circuit (ASIC), etc., software stored in a memory, or at least one processor.

Reference numerals used for method steps are just used to identify the respective steps, but not to limit an order of the steps. Thus, unless the context clearly dictates otherwise, the written order may also be practiced otherwise.

Embodiments of the disclosure will now be described with reference to the accompanying drawings.

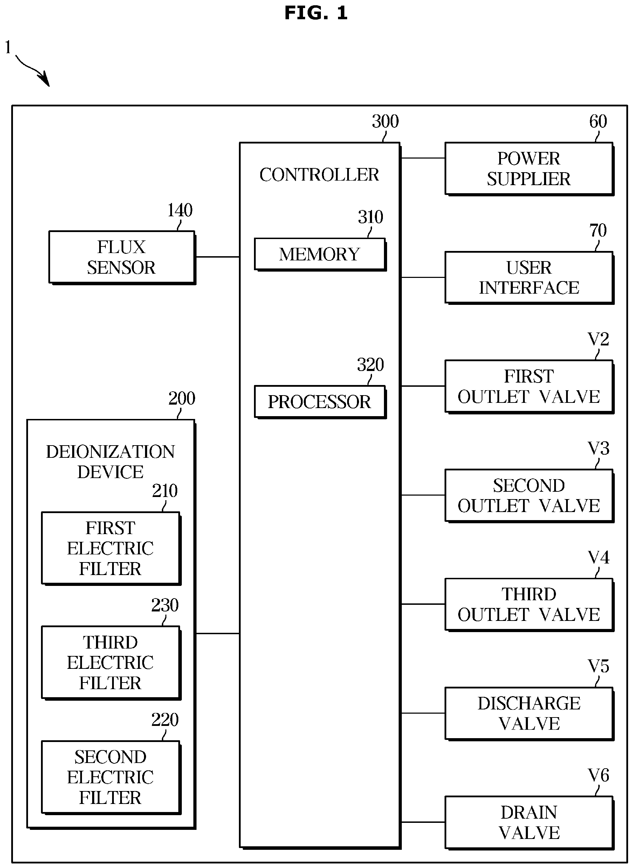

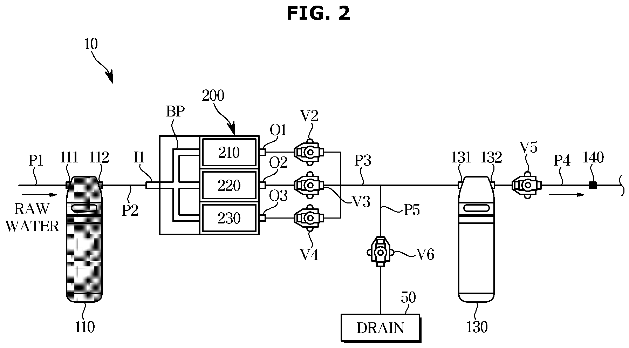

FIG. 1 is a control block diagram of a water purifier, according to an embodiment of this disclosure. FIG. 2 is a configuration of a filter assembly, according to an embodiment of this disclosure.

Referring to FIGS. 1 and 2, the water purifier 1 may include a power supplier 60, a user interface 70, a flux sensor 140, a deionization device 200, and a controller 300. Furthermore, the water purifier 1 may include a first output valve V2, a second output valve V3, a third output valve V4, a discharge valve V5 and a drain valve V6. The deionization device 200 and the plurality of valves may be included in a filter assembly 10 as will be described later.

Components of the water purifier 1 are not limited to those illustrated. Some of the components illustrated may be omitted, or other components may be added in addition to the illustrated components. For example, the water purifier 1 may further include a communication device for communicating with an external device.

The controller 300 may be electrically connected to the components of the water purifier 1 to control operations of the water purifier 1. The controller 300 may include a memory 310 and a processor 320. The memory 310 may memorize/store various information required for operation of the water purifier 1. The memory 310 may store instructions, an application, data and/or a program required for operation of the water purifier 1. The memory 310 may include a volatile memory for temporarily storing data, such as a static random access memory (SRAM), or a dynamic random access memory (DRAM). The memory 310 may also include a non-volatile memory for storing data for a long time, such as a read-only memory (ROM), an erasable programmable ROM (EPROM), or an electrically erasable programmable ROM (EEPROM).

The processor 320 may generate control signals for controlling operation of the water purifier 1 based on instructions, an application, data and/or a program stored in the memory 310. The processor 320 may include logic circuits and operation circuits in hardware. The processor 320 may process the data according to the program and/or instructions provided from the memory 310 and generate a control signal based on the processing result. The memory 310 and the processor 320 may be implemented in one control circuit or in multiple circuits.

The power supplier 60 may be connected to an external power source to obtain power required for operation of the water purifier 1. The power supplier 60 may provide power to electronic components included in the water purifier 1. The power supplier 60 may include a power circuit and may be electrically connected to the controller 300. The controller 300 may control the power supplier 60 to distribute power to the components of the water purifier 1.

The user interface 70 may include a display for displaying information regarding a state and/or operation of the water purifier 1. The user interface 70 may include an input interface for obtaining a user input. The user interface 70 may further include a speaker for outputting sound.

The display may be provided as a liquid crystal display (LCD) panel, a light emitting diode (LED) panel, an organic LED (OLED) panel, or a micro LED panel. The display may be implemented as a touch display.

The input interface may include various buttons. For example, the input interface may include a water purification button, a stop water purification button, a cold water button, a hot water button, a continuous water output button and/or a water purification volume control button. Through the water purification button, a start command or a restart command for the water purification operation may be input. A stop command for the water purification operation may be input through the stop water purification button. A continuity command for the water purification operation may be input through the continuous water output button. The input interface may transmit an electric signal corresponding to a user input to the controller 300.

A flux sensor 140 may measure an amount of purified water released from the filter assembly 10. The flux sensor 140 may transmit an electric signal and/or data corresponding to the measured amount of water flow to the controller 300. The controller 300 may calculate an amount of cumulative purified water of each of the plurality of electric filters 210, 220 and 230 based on the signal and/or data received from the flux sensor 140.

The deionization device 200 may include the plurality of electric filters 210, 220 and 230. For example, the deionization device 200 may include the first electric filter 210, the second electric filter 220 and the third electric filter 230. The electric filters are shown as being provided in three but are not limited thereto. There may be three or more electric filters.

The first electric filter 210, the second electric filter 220 and the third electric filter 230 may each produce purified water by adsorbing ionic materials contained in water brought in during the water purification operation. Each of the first electric filter 210, the second electric filter 220 and the third electric filter 230 may produce wastewater containing ionic materials (e.g., dissolved solids) during a recycling operation.

The plurality of electric filters 210, 220 and 230 may be arranged in parallel, and isolated from each other by partition walls 202, 203 and 204 formed in the housing 201 of the deionization device 220. The plurality of electric filters 210, 220 and 230 may each include a plurality of electrodes. Based on polarity of a voltage or current applied to each of the plurality of electric filters 210, 220 and 230, ionic materials contained in the water may be adsorbed or ionic materials adsorbed on the electrode may be separated.

The plurality of electric filters 210, 220 and 230 may each be a capacitive deionization (CDI) filter. Each of the electric filters 210, 220 and 230 may be an electro deionization (EDI) filter or a continuous electro deionization (CEDI) filter.

Referring to FIG. 2, the water purifier 1 includes the filter assembly 10. The filter assembly 10 may include a plurality of filters and a plurality of water tubes connecting the plurality of filters. The plurality of water tubes may form flow paths in which water flows. Furthermore, a plurality of valves may be provided at the plurality of water tubes. The valve may be opened or closed to open or close the water flow path.

The filter assembly 10 may include a pre-filter 110, the deionization device 200 and a post filter 130. The pre-filter 110 may pre-filter raw water supplied from an external water supply source. The deionization device 200 may produce purified water by adsorbing ionic materials contained in the pre-filtered water. The post filter 130 may further filter the purified water produced by the deionization device 200. The water that has passed the post filter 130 may be released out of the water purifier 1 and provided for the user. Adsorption performance of the deionization device 200 may be controlled by the controller 300.

An inlet 111 of the pre-filer 110 may be connected to a water supply pipe P1 which may be connected to the external water supply source. Raw water may be received in (e.g., brought into) the pre-filter 110 through the water supply pipe P1. The pre-filter 110 may perform a pre-process that filters off debris contained in the water brought in. The water filtered by the pre-filter 110 is released through an outlet 112 of the pre-filter 110.

The pre-filter 110 may be made of various filters. For example, the pre-filter 110 may include a carbon filter, a sediment filter, a turbidity filter and/or a complex filter which is a combination of the sediment filter and the carbon filter. The pre-filter 110 may remove relatively large debris, and remove chlorine, organic compounds, odors and pigments through adsorption. The pre-filter 110 may also include a granular activated carbon (GAC) filter, a block carbon filter and/or a filter obtained by processing coconut with high-heat treatment.

The outlet 112 of the pre-filter 110 and an inlet I1 of the deionization device 200 may be connected to each other by a first connection pipe P2. One end of the first connection pipe P2 may be connected to the outlet 112 of the pre-filter 110. The other end of the first connection pipe P2 may be connected to the inlet I1 of the deionization device 200. Water coming out of the outlet 112 of the pre-filter 110 may flow into the deionization device 200 through the first connection pipe P2.

The inlet I1 of the deionization device 200 is connected to a branched pipe BP located in the housing 201 of the deionization device 200. The branched pipe BP may lead the water brought in through the inlet I1 to the plurality of electric filters 210, 220 and 230. The branched pipe BP may divide a water flow path into multiple ones. For example, the branched pipe BP may have the form of a fork. A portion of the branched pipe BP may be formed as a single tube connected to the inlet I1, and the other portion of the branched pipe BP may be formed as three tubes branched from the tube connected to the inlet I1.

The plurality of electric filters 210, 220 and 230 may be received in the housing 201 of the deionization device 200. The interior of the housing 201 may be divided by the plurality of partition walls 202, 203 and 204 into a plurality of isolation rooms. The first electric filter 210, the second electric filter 220 and the third electric filter 230 may be received in the isolation rooms divided by the partition walls 202, 203 and 204, respectively.

The deionization device 200 may produce purified water by adsorbing ionic materials contained in the water brought in (e.g., raw water through the water supply pipe P1), during the water purification operation. The purified water may be provided as drinking water. During the recycling operation, the deionization device 200 may produce wastewater including ionic materials (e.g., dissolved solids). The wastewater is an undrinkable water and may be discharged to the outside through a drain 50.

The deionization device 200 may include the plurality of outlets O1, O2 and O3. For example, the deionization device 200 may include the first outlet O1, the second outlet O2 and the third outlet O3. The first outlet O1, the second outlet O2 and the third outlet O3 may protrude outward from the housing 201 of the deionization device 200.

The purified water or the wastewater may be discharged through the plurality of outlets O1, O2 and O3. The water that has passed the first electric filter 210 may be discharged through the first outlet O1. The water that has passed the second electric filter 220 may be discharged through the second outlet O2. The water that has passed the third electric filter 230 may be discharged through the third outlet O3.

The plurality of outlets O1, O2 and O3 may be connected to an inlet 131 of the post filter 130 by a second connection pipe P3. The second connection pipe P3 may be provided as a branched pipe having a plurality of inlets and a plurality of outlets. One end of the second connection pipe P2 may be connected to the inlet 131 of the post filter 130. The other end of the second connection pipe P3 may be connected to the first outlet O1, the second outlet O2 and the third outlet O3.

The plurality of outlets O1, O2 and O3 may be equipped with the respective outlet valves V2, V3 and V4. For example, the first outlet O1 may be equipped with the first outlet valve V2, the second outlet O2 may be equipped with the second outlet valve V3, and the third outlet O3 may be equipped with the third outlet valve V4. The first outlet valve V2 may open or close the first outlet O1. The second outlet valve V3 may open or close the second outlet O2. The third outlet valve V4 may open or close the third outlet O3. Opening or closing of the outlet valves V2, V3 and V4 may be controlled by the controller 300.

The discharge valve V5 may be arranged on the side of the outlet 132 of the post filter 130. The discharge valve V5 may open or close the outlet 132 of the post filter 130.

Furthermore, the second connection pipe P3 may be connected to a drain pipe P5. The drain pipe P5 may be branched from the second connection pipe P3. The drain pipe P5 may be connected to the drain 50. The drain valve V6 may be arranged with the drain 50. The drain valve V6 may open or close the drain 50.

The purified water released from the deionization device 200 may flow into the post filter 130 along the second connection pipe P3 during the water purification operation. The discharge valve V5 may be opened and the drain valve V6 may be closed to form a path to release the purified water. With the discharge valve V5 opened and the drain valve V6 closed, the purified water may not be drained out but may flow into the post filter 130.

The post filter 130 may further filter the purified water. The outlet 132 of the post filter 130 may be connected to a water release pipe P4. The purified water that has passed the post filter 130 may be released out of the water purifier 1 along the water release pipe P4 and provided for the user.

The post filter 130 may make the water taste better by adsorbing fine materials and removing gas components and odor. The post filter 130 may be made of various filters. For example, the post filter 130 may include at least one of a granular activated carbon (GAC) filter, a silver carbon filter, a deionization resin (DI ResIl) filter, or a taste chloride reduction (TCR) filter.

During the recycling operation, the wastewater discharged from the deionization device 200 may flow to the drain 50 along the drain pipe P5. The discharge valve V5 may be closed and the drain valve V6 may be opened to form a path to discharge the wastewater. With the discharge valve V5 closed and the drain valve V6 opened, the wastewater produced from recycling of the deionization device 200 may be discharged out of the water purifier 1 through the drain 50.

The flux sensor 140 may be arranged in the water release pipe P4 connected to the outlet 132 of the post filter 130. The flux sensor 140 may measure an amount of purified water flowing along the water release pipe P4. The flux sensor 140 may send an electric signal and/or data corresponding to the measured amount of water flow to the controller 300. The controller 300 may calculate an amount of cumulative purified water of each of the plurality of electric filters 210, 220 and 230 based on the signal and/or data received from the flux sensor 140. The position of the flux sensor 140 is not limited to what is illustrated herein. Alternatively, the flux sensor 140 may be arranged at the inlet 131 of the post filter 130.

The filters, valves and sensors included in the filter assembly 10 are not limited to what are illustrated herein. The filter assembly 10 may further include a device other than what are illustrated herein. For example, the filter assembly 10 may include a total dissolved solid (TDS) sensor (not shown) for detecting dissolved solids contained in the water discharged from the deionization device 200. The TDS sensor may be arranged in the second connection pipe P3 connected to the outlets O1, O2 and O3 of the deionization device 200.

The controller 300 may selectively apply a voltage or current to each of the plurality of electric filters 210, 220 and 230. The controller 300 may control adsorption performance of each of the plurality of electric filters 210, 220 and 230 by controlling the magnitude of the voltage or current applied to each of the plurality of electric filters 210, 220 and 230. A method of applying a certain voltage to the electric filter is called a constant voltage control method, and a method of applying a certain current to the electric filter is called a constant current method.

The controller 300 may selectively apply a voltage or current to the plurality of electric filters 210, 220 and 230 to operate some of the plurality of electric filters 210, 220 and 230 as electric adsorption filters for adsorbing ionic materials and operate the others as electric resting filters that remain in a standby state, during the water purification operation. The voltage applied to the electric filter 210, 220 or 230 during the water purification operation may be called an adsorption voltage. The current applied to the electric filter 210, 220 or 230 during the water purification operation may be called an adsorption current.

The controller 300 may maintain a first number of the electric adsorption filters to be larger than a second number of the electric resting filters, during the water purification operation. For example, two among three electric filters 210, 220, 230 may perform the water purification operation for adsorbing ionic materials, and one electric filter among the three may remain in the standby state. During the water purification operation, performance loss of the deionization device 200 may be minimized by maintaining the first number of electric adsorption filters to be larger than the second number of electric resting filters.

The controller 300 may selectively apply the adsorption voltage or adsorption current to the plurality of electric filters 210, 220 and 230 to switch one of the plurality of electric adsorption filters 210, 220 and 230 to the electric resting filter and switch one of the at least one electric resting filter to the electric adsorption filter at preset intervals during the water purification operation. An electric filter to which the adsorption voltage or adsorption current is applied becomes an electric adsorption filter, and an electric filter to which the adsorption voltage or adsorption current is not applied becomes an electric resting filter. The electric resting filter has zero voltage or zero current. The plurality of electric filters 210, 220 and 230 may circularly perform the water purification operation. When there are three electric filters arranged, two of the first electric filter 210, the second electric filter 220 and the third electric filter 230 may circularly perform the water purification operation.

For example, when the water purification operation begins, the first electric filter 210 and the second electric filter 220 operate as the electric adsorption filters and the third electric filter 230 may operate as the electric resting filter when the voltage or current is applied to the first electric filter 210 and the second electric filter 220. Afterwards, after a preset first period passes, the voltage or current is stopped being applied to the first electric filter 210 and applied to the third electric filter 230. Accordingly, the third electric filter 230 may be switched to the electric adsorption filter and the first electric filter 210 may be switched to the electric resting filter. Afterwards, after a preset second period passes, the voltage or current is stopped being applied to the second electric filter 220 and applied to the first electric filter 210. Accordingly, the first electric filter 210 and the third electric filter 230 may operate as the electric adsorption filters and the second electric filter 220 may operate as the electric resting filter.

The controller 300 may open an outlet valve corresponding to an electric filter to which the voltage or current is applied. The outlet valve may be opened to release the purified water or the wastewater that has passed the electric filter. For example, when the voltage or current is applied to the first electric filter 210, the first outlet valve V2 may be opened. When the voltage or current is applied to the second electric filter 220, the second outlet valve V3 may be opened. When the voltage or current is applied to the third electric filter 230, the third outlet valve V4 may be opened. When the voltage or current is not applied to the electric filter, the outlet valve may be closed.

The controller 300 may control the discharge valve V5 and the drain valve V6 to correspond to the water purification operation or the recycling operation of the deionization device 200. The discharge valve V5 may be opened and the drain valve V6 may be closed during the water purification operation. The discharge valve V5 may be closed and the drain valve V6 may be opened during the recycling operation. That is, the discharge valve V5 and the drain valve V6 may oppositely operate.

Furthermore, the controller 300 may restart the water purification operation or perform the recycling operation for recycling the plurality of electric filters 210, 220 and 230 depending on whether a restart command for the water purification operation is input within a preset waiting time from a point in time when the water purification operation is stopped. The water purifier 1 may be basically configured to stop the water purification operation after releasing purified water for a preset time when a start command for the water purification operation is input. When a continuous water release command is input, the water purifier 1 may release purified water until a stop command is input. In a short time after the water purification operation is stopped, the user may input the restart command for the water purification operation. In this case, the water purifier 1 may selectively use the electric filters 210, 220 and 230 included in the deionization device 200 to restart the water purification operation.

The controller 300 may calculate a cumulative use time of each of the plurality of electric filters 210, 220 and 230. The controller 300 may apply a voltage or current to some electric filters having relatively short cumulative use time to operate the electric filters as the electric adsorption filters first based on the restart command for the water purification operation input in a preset waiting time from a point in time when the water purification is stopped.

For example, a cumulative use time of the first electric filter 210 is 4 minutes, a cumulative use time of the second electric filter 220 is 3 minutes and a cumulative use time of the third electric filter 230 is 2 minutes, which are calculated at a point in time when the water purification is stopped. In response to the restart command for the water purification operation, the controller 300 may apply the voltage or current to the second electric filter 220 and the third electric filter 230 having a relatively short cumulative use time relative to the cumulative use times of the plurality of electric filters, respectively. Accordingly, the second electric filter 220 and the third electric filter 230 may operate as the electric adsorption filters first. Afterwards, the controller 300 may switch electric filters to apply the voltage or current to at preset intervals.

Furthermore, the controller 300 may calculate an amount of cumulative purified water of each of the plurality of electric filters 210, 220 and 230 based on the signal transmitted from the flux sensor 140. The controller 300 may calculate an amount of cumulative purified water of each electric filter by using an amount of water flow measured by the flux sensor 140 while each electric filter is performing the water purification operation. For example, while the first electric filter 210 and the second electric filter 220 are operating as the electric adsorption filters, the amount of cumulative purified water measured by the flux sensor 140 may be calculated as an amount of cumulative purified water of each of the first electric filter 210 and the second electric filter 220.

The controller may apply the voltage or current to some electric filters having relatively small amount of cumulative purified water to operate the electric filters as the electric adsorption filters first based on the restart command for the water purification operation input in a preset waiting time from a point in time when the water purification operation is stopped. For example, an amount of cumulative purified water of the first electric filter 210 may be 5 liters (L), an amount of cumulative purified water of the second electric filter 220 may be 4 L and an amount of cumulative purified water of the third electric filter 230 may be 2 L, which are calculated at a point in time when the water purification is stopped. The controller 300 may apply the voltage or current to the second electric filter 220 and the third electric filter 230 having relatively short cumulative use time, in response to the restart command for the water purification operation. Accordingly, the second electric filter 220 and the third electric filter 230 may operate as the electric adsorption filters first. Afterwards, the controller 300 may switch electric filters to apply the voltage or current to at preset intervals.

The controller 300 may start the recycling operation to recycle the plurality of electric filters 210, 220 and 230 based on passage of a preset waiting time without an input of the restart command after the water purification operation is stopped. The controller 300 may sequentially apply a recycling voltage or recycling current to the plurality of electric filters 210, 220 and 230 during the recycling operation. The recycling voltage refers to a voltage having polarity opposite to the voltage applied to the electric filter 210, 220 or 230 during the water purification operation. The recycling current refers to a current having polarity opposite to the current applied to the electric filter 210, 220 or 230 during the water purification operation.

Even when adsorption ability of each of the electric filters 210, 220 and 230 has not been used to the limit, recycling may be performed while the water purifier 1 is not being used. This may shorten the recycling time of each electric filter.

The controller 300 may recycle the electric filters in a sequence from one having a maximum cumulative use time to one having a minimum cumulative use time. The controller 300 may also recycle the electric filters in a sequence from one having a maximum amount of cumulative purified water to one having a minimum amount of cumulative purified water. That is, the controller 300 may recycle from an electric filter that has been used the most.

The controller 300 may initialize the cumulative use time and/or the amount of cumulative purified water of each electric filter based on completion of the recycling operation of each of the plurality of electric filters 210, 220 and 230. The controller 300 may initialize the cumulative use time and/or the amount of cumulative purified water to zero at a time of completion of the recycling of each electric filter, and recalculate a cumulative use time and/or an amount of cumulative purified water of each electric filter as the water purification operation is started.

Furthermore, the controller 300 may stop applying the recycling voltage or recycling current to the electric filter 210, 220 or 230 based on the start command for the water purification operation input before completion of the recycling operation of the electric filter 210, 220 or 230. In other words, when the start command for the water purification operation is input during the recycling operation of an electric filter, the controller 300 may stop the recycling operation of the deionization device 200. The controller 300 may selectively apply the adsorption voltage or adsorption current to the plurality of electric filters 210, 220 and 230 to perform the water purification operation.

This may allow the water purifier 1 as disclosed herein to provide purified water right away even when the start command for the water purification operation is input from the user during recycling of the deionization device 200. By maintaining the water purifier 1 to be used anytime, convenience of use may be improved. Furthermore, the wastewater produced from recycling of the deionization device 200 may be prevented from being mixed with the purified water. Performance loss of the deionization device 200 may be minimized by allowing an electric filter to be used even when the recycling of the electric filter has not been completely done.

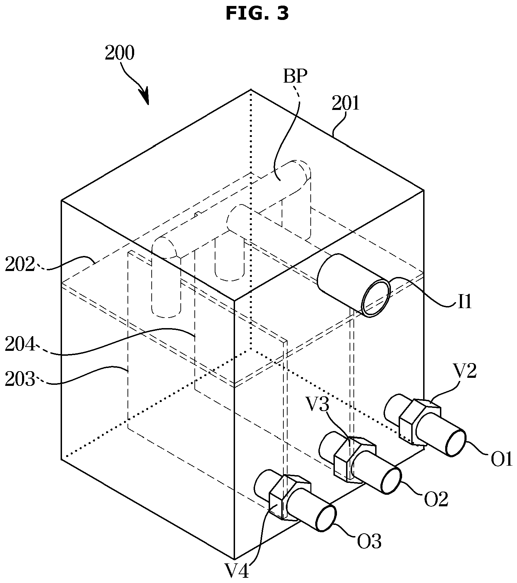

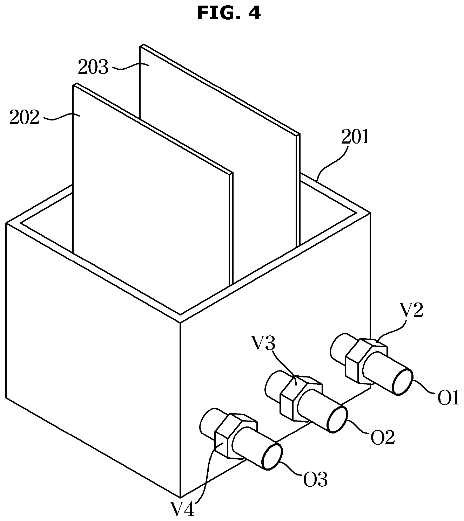

FIG. 3 illustrates a housing of a deionization filter, according to an embodiment of this disclosure. FIG. 4 illustrates partition walls in a housing of a deionization filter, according to an embodiment of this disclosure.

Referring to FIGS. 3 and 4, the deionization device 200 may include the housing 201. The plurality of electric filters 210, 220 and 230 may be arranged in parallel in the housing 201. The plurality of partition walls 202, 203 and 204 for forming a plurality of isolation rooms may be arranged in the housing 201. The housing 201 and the partition walls 202, 203 and 204 may be formed integrally or detachably. The second partition wall 203 and the third partition wall 204 may be formed in parallel with each other and spaced from each other. The first partition wall 202 may be formed to be perpendicular to the second partition wall 203 and the third partition wall 204.

For example, the first partition wall 202, the second partition wall 203 and the third partition wall 204 may be formed in the housing 201. The plurality of isolation rooms may include a first isolation room formed between the housing 201 and the first partition wall 202, a second isolation room formed between the housing 201 and the second partition wall 203, a third isolation room formed between the second partition wall 203 and the third partition wall 204, and a fourth isolation room formed between the third partition wall 204 and the housing 201.

The branched pipe BP may be located in the first isolation room, a space between the housing 201 and the first partition wall 202. The branched pipe BP may lead the water brought in through the inlet I1 of the housing 201 to the plurality of electric filters 210, 220 and 230. A portion of the branched pipe BP may be connected to the inlet I1 and the other portion of the branched pipe BP may pass through the first partition wall 202. The branched pipe BP may be shaped like a fork. The one portion of the branched pipe BP may be formed as a single tube connected to the inlet I1, and the other portion of the branched pipe BP may be formed as three tubes branched from the one tube connected to the inlet I1.

The first electric filter 210 may be received in the second isolation room, a space between the housing 201 and the second partition wall 203. The second electric filter 220 may be received in the third isolation room, a space between the second partition wall 203 and the third partition wall 204. The third electric filter 230 may be received between the second partition wall 203 and the housing 201. Accordingly, the first electric filter 210, the second electric filter 220 and the third electric filter 230 may be isolated from each other.

The plurality of outlets O1, O2 and O3 may be formed at the housing 201 to discharge the water that has passed the plurality of electric filters 210, 220 and 230. The water that has passed the first electric filter 210 may be discharged through the first outlet O1, the water that has passed the second electric filter 220 may be discharged through the second outlet O2, and the water that has passed the third electric filter 230 may be discharged through the third outlet O3. Furthermore, as described above, the plurality of outlets O1, O2 and O3 may be equipped with the respective outlet valves V2, V3 and V4.

Although it is shown that one inlet I1 and multiple outlets O1, O2 and O3 are formed at the housing 201, it is not limited thereto. On the contrary to what is illustrated herein, the housing 201 may include multiple inlets (e.g., three inlets) and one outlet. In the case that the inlet is provided in the plural, a valve may be arranged at each inlet. For example, O1, O2 and O3 denoted as outlets in FIG. 3 may be inlets and I1 denoted as an inlet may be an outlet.

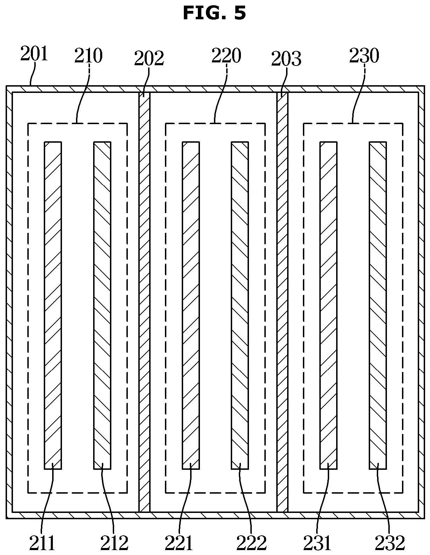

FIG. 5 is a cross-sectional view of a deionization filter, according to an embodiment of this disclosure.

Referring to FIG. 5, the plurality of electric filters 210, 220 and 230 may each be a bipolar type CDI filter. The plurality of electric filters 210, 220 and 230 may each include a plurality of electrodes. For example, the first electric filter 210 may include a first electrode 211 and a second electrode 212. The second electric filter 220 may include a third electrode 221 and a fourth electrode 222. The third electric filter 230 may include a fifth electrode 231 and a sixth electrode 232. In addition, each electric filter may include an electrode active material, an ion exchange membrane and/or a spacer.

The electrode may have the shape of a rectangle or square. The plurality of electrodes may be arranged in parallel with each other, and positioned to be parallel to a direction in which water flows. That is, water may flow between the plurality of electrodes. Although each electric filter is shown as including two electrodes, it is not limited thereto. Each electric filter may be provided in the form of a stack of a plurality of electrodes.

By arranging the plurality of electric filters 210, 220 and 230 to be isolated from each other in the one housing 201, the filter assembly 10 may become smaller. Accordingly, the whole size of the water purifier 1 may be reduced and convenience in installation at home may increase.

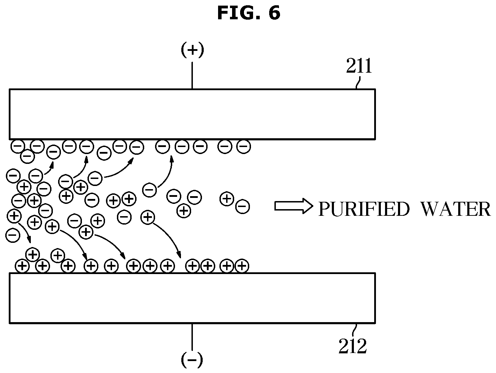

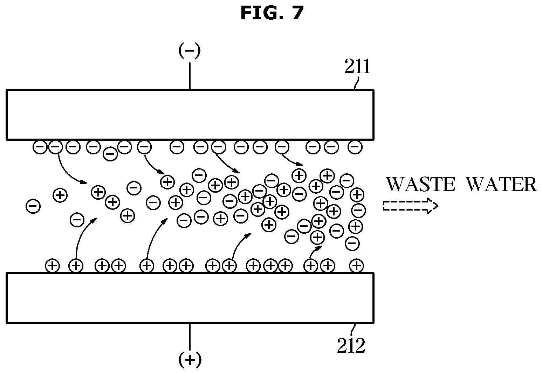

FIG. 6 illustrates a principle of water purification by a deionization filter, according to an embodiment of this disclosure. FIG. 7 illustrates a principle of recycling of a deionization filter, according to an embodiment of this disclosure.

As described above, the deionization device 200 may include the plurality of electric filters 210, 220 and 230. For convenience of explanation, the first electric filter 210 will now be taken as an example to describe a principle of water purification and a principle of recycling of an electric filter. When a voltage or current is applied to the first electrode 211 and the second electrode 212 of the first electric filter 210, an electric field may be produced between the first electrode 211 and the second electrode 212. The direction of electric field may change depending on the polarity of the voltage or the polarity of the current applied to the first electrode 211 and the second electrode 212.

Referring to FIG. 6, the adsorption voltage may be applied to the first electrode 211 and the second electrode 212. For example, with the application of the adsorption voltage, the first electrode 211 may be the positive electrode and the second electrode 212 may be the negative electrode. In this case, when water flows between the first electrode 211 and the second electrode 212 separated from each other, ionic materials contained in the water (e.g., dissolved solids) may move to the first electrode 211 and the second electrode 212 according to electric attraction. Ionic materials having the negative charge may be adsorbed to the first electrode 211, and ionic materials having the positive charge may be adsorbed to the second electrode 212. The water having passed the first electric filter 210 may then contain no ionic material or may contain very small amount of ionic materials.

By the way, when the ionic materials are constantly accumulated on the first electrode 211 and the second electrode 212 as the water purification operation continues, the electric field produced between the first electrode 211 and the second electrode 212 may be weak. Under the weak electric field, the ionic materials are not readily adsorbed to the first electrode 211 and the second electrode 212, so the adsorption ability of the first electric filter 210 is lowered. To recover the adsorption performance of the first electric filter 210, the first electric filter 210 needs to be recycled.

Referring to FIG. 7, to recover the adsorption ability of the first electric filter 210, a recycling voltage having polarity opposite to the adsorption voltage may be applied to the first electrode 211 and the second electrode 212. For example, with the application of the recycling voltage, the first electrode 211 may be the negative electrode and the second electrode 212 may be the positive electrode. As the recycling voltage having polarity opposite to the adsorption voltage is applied to the first electrode 211 and the second electrode 212, ionic materials that have been adsorbed to the first electrode 211 and the second electrode 212 may be separated from the first electrode 211 and the second electrode 212.

Furthermore, even when the voltage is not applied to the first electrode 211 and the second electrode 212, the ionic materials may be separated from the first electrode 211 and the second electrode 212. As attraction force that affects the ionic materials vanishes when the electric field disappears, the ionic materials may be separated from the first electrode 211 and the second electrode 212. The ionic materials separated from the first electrode 211 and the second electrode 212 may be discharged to the outside along with the water. With this, adsorption ability of the first electric filter 210 may be recovered.

The second electric filter 220 and the third electric filter 230 may operate on the same principle as well. The first electric filter 210, the second electric filter 220 and the third electric filter 230 may be separately controlled by the controller 300.

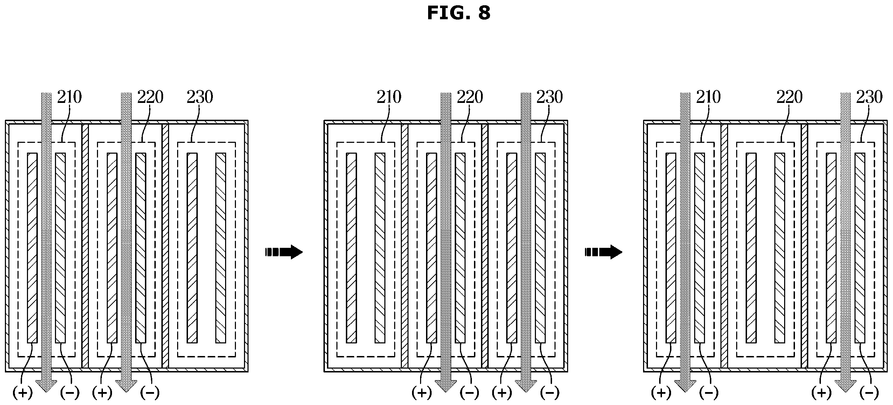

FIG. 8 illustrates an example of circular operation of some of a plurality of electric filters during a water purification operation.

Referring to FIG. 8, the controller 300 of the water purifier 1 may selectively apply a voltage or current for adsorption of ionic materials to the plurality of electric filters 210, 220 and 230 during the water purification operation. Hence, some of the plurality of electric filters 210, 220 and 230 may operate as electric adsorption filters for adsorbing ionic materials and the others may operate as electric resting filters that remain in a standby state. The plurality of electric filters 210, 220 and 230 may circularly perform the water purification operation. The controller 300 may switch the electric filter to apply the adsorption voltage to at preset intervals during the water purification operation. The controller 300 may maintain a first number of the electric adsorption filters to be larger than a second number of the electric resting filters, during the water purification operation.

For example, during the water purification operation, the adsorption voltage or the adsorption current may be applied first to the first electric filter 210 and the second electric filter 220, and may not be applied to the third electric filter 230. With the application of the adsorption voltage or adsorption current, the first electrode 211 and the third electrode 221 may become positive electrodes and the second electrode 212 and the fourth electrode 222 may become negative electrodes. Furthermore, the first outlet valve V2 and the second outlet valve V3 may be opened and the third outlet valve V4 may be closed. Accordingly, the first electric filter 210 and the second electric filter 220 may operate as the electric adsorption filters for producing purified water and the third electric filter 230 may operate as the electric resting filter that remains in the standby state.

After a preset first period passes, the adsorption voltage or adsorption current is stopped being applied to the first electric filter 210 but is applied to the third electric filter 230. With the application of the adsorption voltage or adsorption current, the fifth electrode 231 may be the positive electrode and the sixth electrode 232 may be the negative electrode. Furthermore, the first outlet valve V2 may be closed, the second outlet valve V3 may remain in the open state and the third outlet valve V4 may be opened. Accordingly, the third electric filter 230 may be switched to the electric adsorption filter and the first electric filter 210 may be switched to the electric resting filter.

After a preset second period passes, the adsorption voltage or adsorption current is stopped being applied to the second electric filter 220 but is applied to the first electric filter 210. In other words, the first electrode 211 of the first electric filter 210 may become the positive electrode again and the second electrode 212 may become the negative electrode again. Furthermore, the first outlet valve V2 may be opened again, the second outlet valve V3 may be closed, and the third outlet valve V4 may remain in the open state. Accordingly, the first electric filter 210 may be switched back to the electric adsorption filter and the second electric filter 220 may be switched to the electric resting filter.

As such, during the water purification operation, performance loss of the deionization device 200 may be minimized by maintaining the number of electric adsorption filters to be larger than the number of electric resting filters.

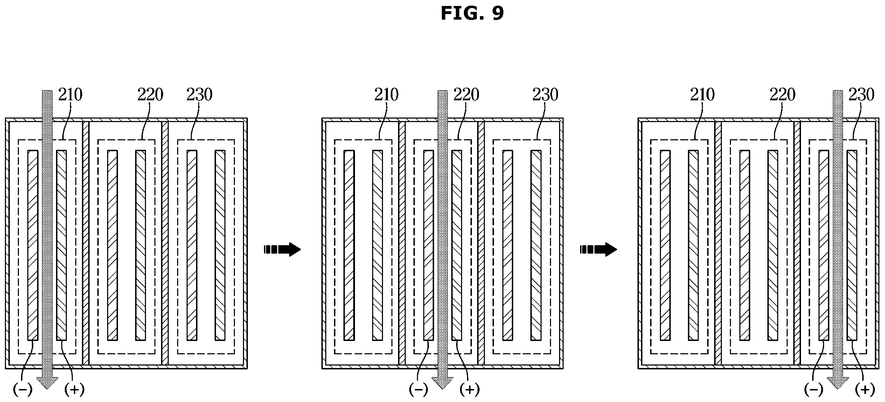

FIG. 9 illustrates an example of sequentially recycling a plurality of electric filters during a water purification operation.

Referring to FIG. 9, the controller 300 of the water purifier 1 may sequentially recycle the electric filters 210, 220 and 230 of the deionization device 200. The controller 300 may start the recycling operation to recycle the plurality of electric filters 210, 220 and 230 based on passage of a preset waiting time without an input of the restart command after the water purification operation is stopped. The controller 300 may sequentially apply a recycling voltage or recycling current having polarity opposite to the adsorption voltage or adsorption current to the plurality of electric filters during the recycling operation.

The controller 300 may recycle the electric filters in a sequence from one having a maximum cumulative use time to one having a minimum cumulative use time. The controller 300 may also recycle the electric filters in a sequence from one having a maximum amount of cumulative purified water to one having a minimum amount of cumulative purified water. That is, the controller 300 may recycle from an electric filter that has been used the most. A recycling time of each of the electric filters 210, 220 and 230 may be determined according to the cumulative use time or the amount of cumulative purified water. The recycling time may be set to be longer the larger the cumulative use time or the amount of cumulative purified water.

For example, to recover the adsorption ability of the first electric filter 210 first, a recycling voltage or recycling current having opposite polarity may be applied to the first electrode 211 and the second electrode 212. That is, the first electrode 211 may be the negative electrode and the second electrode 212 may be the positive electrode. Accordingly, the ionic materials that have been bonded to the first electrode 211 and the second electrode 212 may be separated from the first electrode 211 and the second electrode 212. The voltage may not be applied to the second electric filter 220 and the third electric filter 230.

When recycling of the first electric filter 210 is completed, the recycling operation of the second electric filter 210 may be performed. The controller 300 may apply the recycling voltage or recycling current to the third electrode 221 and the fourth electrode 222. That is, the third electrode 221 may be the negative electrode and the fourth electrode 222 may be the positive electrode. When recycling of the second electric filter 210 is completed, the recycling operation of the third electric filter 230 may be performed. The controller 300 may apply the recycling voltage or recycling current to the fifth electrode 231 and the sixth electrode 232. That is, the fifth electrode 231 may be the negative electrode and the sixth electrode 232 may be the positive electrode.

When the start command for the water purification operation is input during the recycling operation of an electric filter, the controller 300 may stop the recycling operation of the deionization device 200 and perform the water purification operation by circularly using the electric filters.

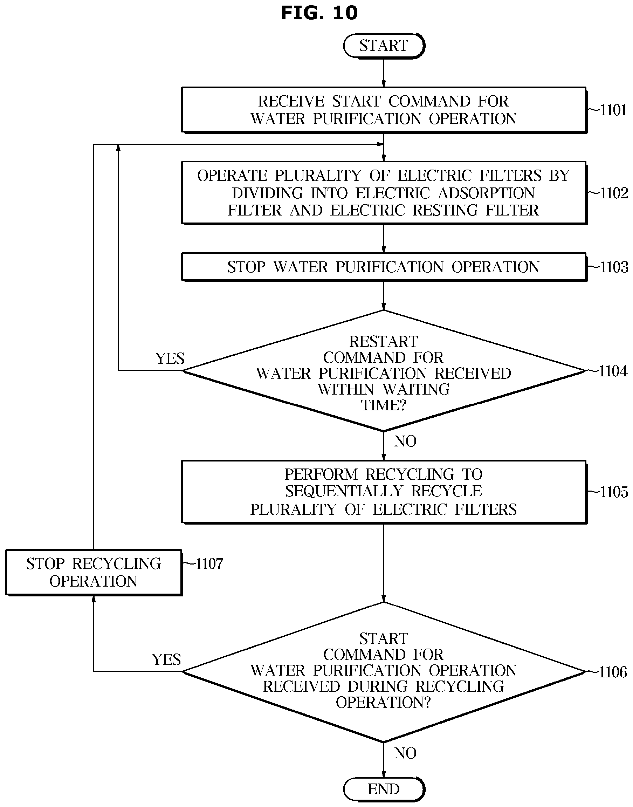

FIG. 10 illustrates a method of controlling a water purifier, according to an embodiment of this disclosure.

Referring to FIG. 10, the controller 300 of the water purifier 1 may receive a start command for the water purification operation from the user interface 70 in 1101. For example, the user interface 70 may send the start command for the water purification operation to the controller 300 in response to the water purification button being pressed.

The controller 300 may operate the plurality of electric filters 210, 220 and 230 as a plurality of electric adsorption filters for adsorbing ionic materials and at least one electric resting filter that remains in the standby state. For this, the controller 300 may apply the adsorption voltage or the adsorption current to some of the plurality of electric filters 210, 220 and 230, in 1102. The controller 300 may maintain a first number of the electric adsorption filters to be larger than a second number of the electric resting filters, during the water purification operation. The electric filters 210, 220 and 230 may circularly perform the water purification operation. During the water purification operation, performance loss of the deionization device 200 may be minimized by maintaining the first number of electric adsorption filters to be larger than the second number of electric resting filters.

Based on the passage of a preset time from when the water purification operation starts, or the stop command received through the user interface 70, the controller 300 may stop the water purification operation, in 1103. In a short time after the water purification operation is stopped, the user may input the restart command for the water purification operation. The controller 300 may restart the water purification operation based on a restart command for the water purification operation input in a preset waiting time from a point in time when the water purification operation is stopped, in 1104 and 1102. In this case, the controller 300 may apply an adsorption voltage or adsorption current to some electric filters having a relatively short cumulative use time or relatively small amount of cumulative purified water first.

The controller 300 may perform the recycling operation to sequentially recycle the plurality of electric filters 210, 220 and 230 based on passage of a preset waiting time without an input of the restart command after the water purification operation is stopped, in 1105. The controller 300 may sequentially apply a recycling voltage or recycling current having polarity opposite to the adsorption voltage or adsorption current to the plurality of electric filters 210, 220 and 230 for the recycling operation. Even when adsorption ability of each of the electric filters 210, 220 and 230 has not been used to the limit, recycling may be performed while the water purifier 1 is not being used. This may shorten the recycling time of each electric filter.

The controller 300 may recycle from an electric filter having a maximum cumulative use time. An electric filter having a minimum cumulative use time may be the last to be recycled. The controller 300 may also recycle from an electric filter having a maximum amount of cumulative purified water. An electric filter having a minimum amount of cumulative purified water may be the last to be recycled. That is, the controller 300 may recycle from an electric filter that has been used the most.

The controller 300 may stop the recycling operation of the electric filters 210, 220 and 230 based on the start command for the water purification operation input before completion of the recycling operation of the electric filter 210, 220 or 230, in 1106 and 1107. That is, application of the recycling voltage or the recycling current to the electric filter 210, 220 or 230 may be stopped. The controller 300 may then operate the plurality of electric filters 210, 220 and 230 as the electric adsorption filter and the electric resting filter to perform the water purification operation again.

When the start command for the water purification operation is not input during the recycling operation of the electric filters 210, 220 and 230, recycling of the electric filters 210, 220 and 230 may be sequentially done. After recycling of each electric filter is done, the electric filter may be switched into the standby state. In other words, after completion of recycling of the electric filter, the water purifier 1 may enter into a standby mode or a power saving mode.

According to an embodiment, a water purifier includes a deionization device for purifying water with electric power and a controller electrically connected to the deionization device. The deionization device may include a housing, a plurality of partition walls defining a plurality of isolation rooms in the housing, and a plurality of electric filters received in the plurality of isolation rooms, respectively. The controller may operate the plurality of electric filters by dividing the plurality of electric filters into a plurality of electric adsorption filters which adsorb ionic materials and at least one electric resting filter which remains in a standby state during a water purification operation. The controller may restart the water purification operation or perform a recycling operation to recycle the plurality of electric filters depending on whether a restart command for the water purification operation is input within a preset waiting time from a point in time when the water purification operation is stopped. The controller may maintain a first number of the plurality of electric adsorption filters to be larger than a second number of the at least one electric resting filter during the water purification operation.

The controller may stop applying the adsorption voltage or adsorption current to one of the plurality of electric adsorption filters to switch the electric adsorption filter to an electric resting filter at preset intervals during the water purification operation. The controller may apply the adsorption voltage or adsorption current to one of the at least one electric resting filter to switch the electric resting filter to an electric adsorption filter at preset intervals.

The controller may calculate a cumulative use time of each of the plurality of electric filters, and operate some electric filters having a relatively short cumulative use time as the electric adsorption filter first based on a restart command for the water purification operation input within the preset waiting time.

The water purifier may further include a flux sensor for measuring an amount of purified water discharged from the deionization device. The controller may calculate an amount of cumulative purified water of each of the plurality of electric filters based on the signal sent from the flux sensor, and operate some electric filters having a relatively small amount of cumulative purified water as the electric adsorption filter first based on a restart command for the water purification operation input within the preset waiting time.

The controller may start the recycling operation based on the passage of the preset waiting time without an input of the restart command, and may sequentially apply a recycling voltage or recycling current having polarity opposite to the adsorption voltage or adsorption current to the plurality of electric filters during the recycling operation.

The controller may calculate a cumulative use time of each of the plurality of electric filters, recycle an electric filter having a longest cumulative use time first, and subsequently (e.g., lastly) recycle an electric filter having a shorter (e.g., the shortest) cumulative use time.

The controller may recycle an electric filter having the largest amount of cumulative purified water first, and subsequently (e.g., lastly) recycle an electric filter having a smaller (e.g., the smallest) amount of cumulative purified water.

Based on the start command for the water purification operation input before completion of the recycling operation, the controller may stop applying the recycling voltage or the recycling current and apply the adsorption voltage or adsorption current to some of the plurality of electric filters.

The deionization device may include an inlet formed at the housing; a branched pipe connected to the inlet and located in the housing to lead water to each of the plurality of electric filters; a plurality of outlets formed at the housing to discharge water having passed each of the plurality of electric filters; and a plurality of outlet valves configured to open or close the plurality of outlets, respectively.

The plurality of partition walls may include a first partition wall through which the branched pipe passes; a second partition wall formed to be perpendicular to the first partition wall; and a third partition wall formed to be perpendicular to the first partition wall and parallel to the second partition wall.

The water purifier may further include a connection pipe connecting the plurality of outlets to a post filter; a discharge valve configured to open or close an outlet of the post filter; a drain pipe branched from the connection pipe and connected to a drain; and a drain valve configured to open or close the drain.

The controller may control the discharge valve and the drain valve to open the outlet of the post filter and close the drain during the water purification operation, and control the discharge valve and the drain valve to close the outlet of the post filter and open the drain during the recycling operation.

A method of controlling a water purifier according to an embodiment may include operating, by a controller, a plurality of electric filters arranged in a plurality of isolation rooms formed in a housing, respectively, by dividing the plurality of electric filters into a plurality of electric adsorption filters which adsorb ionic materials and at least one electric resting filter which remains in a standby state during a water purification operation of the water purifier; restarting the water purification operation or performing recycling operation to recycle the plurality of electric filters, by the controller, depending on whether a restart command for the water purification operation is input within a preset waiting time from a point in time when the water purification operation is stopped; and maintaining, by the controller, a first number of the plurality of electric adsorption filters to be larger than a second number of the at least one electric resting filter.

The maintaining of the first number of the plurality of electric adsorption filters may include stopping applying the adsorption voltage or adsorption current to one of the plurality of electric adsorption filters to switch the electric adsorption filter to an electric resting filter at preset intervals during the water purification operation; and applying the adsorption voltage or adsorption current to one of the at least one electric resting filter to switch the electric resting filter to an electric adsorption filter at the preset intervals.

The method of controlling the water purifier may further include calculating a cumulative use time of each of the plurality of electric filters. The maintaining of the first number of the plurality of electric adsorption filters may include operating some electric filters having a relatively short cumulative use time as the electric adsorption filter first based on a restart command for the water purification operation input within the preset waiting time.

The method of controlling the water purifier may further include calculating an amount of cumulative purified water of each of the plurality of electric filters. The maintaining of the first number of the plurality of electric adsorption filters may include operating some electric filters having a relatively small amount of cumulative purified water as the adsorption electric filter first based on a restart command for the water purification operation input within the preset waiting time.

The recycling operation may be started based on passage of the preset waiting time without an input of the restart command. The recycling operation may include sequentially applying a recycling voltage or a recycling current having polarity opposite to the adsorption voltage or the adsorption current to the plurality of electric filters during the recycling operation.

The recycling operation may recycle an electric filter having a longest cumulative use time first, and lastly recycle an electric filter having a shortest cumulative use time.

The recycling operation may recycle an electric filter having the largest amount of cumulative purified water first, and lastly recycle an electric filter having the smallest amount of cumulative purified water.

The method of controlling a water purifier may further include, based on a start command for the water purification operation input before completion of the recycling operation, stopping applying the recycling voltage or the recycling current and applying the adsorption voltage or adsorption current to some of the plurality of electric filters.

As described above, a water purifier and method for controlling the same as disclosed herein may minimize performance loss of a deionization device by using a plurality of electric filters arranged in parallel and providing purified water anytime. Accordingly, convenience of use of the water purifier may be improved.

Furthermore, the water purifier and method for controlling the same as disclosure herein may make a filter assembly smaller by having a plurality of electric filters arranged to be isolated from each other in one housing. Accordingly, the total size of the water purifier may be reduced.

Meanwhile, the embodiments of the disclosure may be implemented in the form of a storage medium for storing instructions to be carried out by a computer. The instructions may be stored in the form of program codes, and when executed by a processor, may generate program modules to perform operation in the embodiments of the disclosure.

The machine-readable storage medium may be provided in the form of a non-transitory storage medium. The term 'non-transitory storage medium' may mean a tangible device without including a signal, e.g., electromagnetic waves, and may not distinguish between storing data in the storage medium semi-permanently and temporarily. For example, the non-transitory storage medium may include a buffer that temporarily stores data.

The aforementioned methods according to the various embodiments of the disclosure may be provided in a computer program product. The computer program product may be a commercial product that may be traded between a seller and a buyer. The computer program product may be distributed in the form of a storage medium (e.g., a compact disc read only memory (CD-ROM)), through an application store (e.g., play store^{™}), directly between two user devices (e.g., smart phones), or online (e.g., downloaded or uploaded). In the case of online distribution, at least part of the computer program product (e.g., a downloadable app) may be at least temporarily stored or arbitrarily created in a storage medium that may be readable to a device such as a server of the manufacturer, a server of the application store, or a relay server.

The embodiments of the disclosure have thus far been described with reference to accompanying drawings. It will be obvious to those of ordinary skill in the art that the disclosure may be practiced in other forms than the embodiments of the disclosure as described above without changing the technical idea or essential features of the disclosure. The above embodiments of the disclosure are only by way of example, and should not be construed in a limited sense.

## Claims

1. A water purifier comprising:
a deionization device configured to purify water with electric power, wherein the deionization device comprises a housing, a plurality of partition walls defining a plurality of isolation rooms in the housing, and a plurality of electric filters received in the plurality of isolation rooms, respectively; and
a controller electrically connected to the deionization, wherein the controller is configured to:
operate the plurality of electric filters by dividing the plurality of electric filters into a plurality of electric adsorption filters configured to adsorb ionic materials and at least one electric resting filter configured to remain in a standby state during a water purification operation;
restart the water purification operation or perform a recycling operation to recycle the plurality of electric filters, depending on whether a restart command for the water purification operation is input within a preset waiting time from a point in time when the water purification operation is stopped; and
maintain a first number of the plurality of electric adsorption filters to be greater than a second number of the at least one electric resting filter during the water purification operation.

2. The water purifier of claim 1, wherein the controller is configured to:
stop applying an adsorption voltage or adsorption current to one of the plurality of electric adsorption filters to switch the electric adsorption filter to an electric resting filter at preset intervals during the water purification operation; and
apply the adsorption voltage or adsorption current to one of the at least one electric resting filter to switch the electric resting filter to an electric adsorption filter at the preset intervals.

3. The water purifier of claim 2, wherein the controller is configured to:
calculate a cumulative use time of each of the plurality of electric filters; and
first operate some electric filters having a shorter cumulative use time relative to the cumulative use times of the plurality of electric filters as the electric adsorption filter, based on a restart command for the water purification operation input within the preset waiting time.

4. The water purifier of claim 2, further comprising a flux sensor configured to measure an amount of purified water discharged from the deionization device,
wherein the controller is configured to:
calculate an amount of cumulative purified water of each of the plurality of electric filters based on a signal sent from the flux sensor; and
first operate some electric filters having a smaller amount of cumulative purified water relative to the amounts of cumulative purified water of the plurality of electric filters as the electric adsorption filter, based on a restart command for the water purification operation input within the preset waiting time.

5. The water purifier of claim 2, wherein the controller is configured to:
start the recycling operation based on passage of the preset waiting time without an input of the restart command; and
apply a recycling voltage or a recycling current having polarity opposite to the adsorption voltage or the adsorption current sequentially to the plurality of electric filters during the recycling operation.

6. The water purifier of claim 5, wherein the controller is configured to:
calculate a cumulative use time of each of the plurality of electric filters; and
first recycle an electric filter having a longest cumulative use time; and
subsequently recycle an electric filter having a shorter cumulative use time.

7. The water purifier of claim 5, further comprising: a flux sensor configured to measure an amount of purified water discharged from the deionization device,
wherein the controller is configured to:
calculate an amount of cumulative purified water of each of the plurality of electric filters based on a signal sent from the flux sensor; and
first recycle an electric filter having a largest amount of cumulative purified water; and
subsequently recycle an electric filter having a smaller amount of cumulative purified water.

8. The water purifier of claim 5, wherein the controller is configured to, based on a start command for the water purification operation input before completion of the recycling operation, stop applying the recycling voltage or the recycling current and apply the adsorption voltage or adsorption current to some of the plurality of electric filters.

9. The water purifier of claim 1, wherein the deionization device comprises:
an inlet formed at the housing;
a branched pipe connected to the inlet and located in the housing to lead water to each of the plurality of electric filters;
a plurality of outlets formed at the housing to discharge water having passed each of the plurality of electric filters; and
a plurality of outlet valves configured to open or close the plurality of outlets, respectively.

10. The water purifier of claim 9, wherein the plurality of partition walls comprise:
a first partition wall through which the branched pipe passes;
a second partition wall formed to be perpendicular to the first partition wall; and
a third partition wall formed to be perpendicular to the first partition wall and parallel to the second partition wall.

11. The water purifier of claim 9, further comprising:
a connection pipe connecting the plurality of outlets to a post filter;
a discharge valve configured to open or close an outlet of the post filter;
a drain pipe branched from the connection pipe and connected to a drain; and
a drain valve configured to open or close the drain.

12. The water purifier of claim 11, wherein the controller is configured to:
control the discharge valve and the drain valve to open the outlet of the post filter and close the drain during the water purification operation; and
control the discharge valve and the drain valve to close the outlet of the post filter and open the drain during the recycling operation.

13. A method of controlling a water purifier, the method comprising:
operating, by a controller, a plurality of electric filters arranged in a plurality of isolation rooms formed in a housing, respectively, by dividing the plurality of electric filters into a plurality of electric adsorption filters configured to adsorb ionic materials and at least one electric resting filter configured to remain in a standby state during a water purification operation of the water purifier;
restarting, by the controller, the water purification operation or performing recycling operation to recycle the plurality of electric filters, depending on whether a restart command for the water purification operation is input within a preset waiting time from a point in time when the water purification operation is stopped; and
maintaining, by the controller, a first number of the plurality of electric adsorption filters to be greater than a second number of the at least one electric resting filter.

14. The method of claim 13, wherein the maintaining of the first number of the plurality of electric adsorption filters comprises:
stopping applying an adsorption voltage or adsorption current to one of the plurality of electric adsorption filters to switch the electric adsorption filter to an electric resting filter at preset intervals during the water purification operation; and
applying the adsorption voltage or adsorption current to one of the at least one electric resting filter to switch the electric resting filter to an electric adsorption filter at the preset intervals.

15. The method of claim 14, further comprising calculating a cumulative use time of each of the plurality of electric filters,
wherein the maintaining of the first number of the plurality of electric adsorption filters comprises first operating some electric filters having a shorter cumulative use time relative to the cumulative use times of the plurality of electric filters as the electric adsorption filter, based on a restart command for the water purification operation input within the preset waiting time.
